## Europäisches Patentamt
## European Patent Office
## Office européen des brevets

(19)

(11) Veröffentlichungsnummer: **0 274 013**
**B1**

(12) # EUROPÄISCHE PATENTSCHRIFT

(45) Veröffentlichungstag der Patentschrift:
13.12.89

(51) Int. Cl.⁴: **B60T 8/24**

(21) Anmeldenummer: 87115407.6

(22) Anmeldetag: 21.10.87

(54) **Querbeschleunigungsabhängige Bremsdrucksteuervorrichtung für eine hydraulische Fahrzeugbremsanlage.**

(30) Priorität: 04.12.86 DE 3641421

(43) Veröffentlichungstag der Anmeldung:
13.07.88 Patentblatt 88/28

(45) Bekanntmachung des Hinweises auf die Patenterteilung:
13.12.89 Patentblatt 89/50

(84) Benannte Vertragsstaaten:
DE FR GB IT

(56) Entgegenhaltungen:
EP-A- 0 165 858
DE-A- 3 207 728
FR-A- 2 371 326
FR-A- 2 519 921

PATENT ABSTRACTS OF JAPAN, Band 6,
Nr. 246 (M-176)[1124], 4. Dezember 1982; &
JP-A-57 144 158 (TOYO KOGYO K.K.) 06-09-1982

(73) Patentinhaber: **Dr.Ing.h.c. F. Porsche Aktiengesellschaft, Porschestrasse 42, D-7000 Stuttgart 40(DE)**

(72) Erfinder: **Kroniger, Wilhelm, Dipl.-Ing., Am Geissberg 20, D-7251 Friolzheim(DE)**

**Beschreibung**

Die Erfindung bezieht sich auf eine querbeschleunigungsabhängige Bremsdrucksteuervorrichtung nach dem Oberbegriff des Anspruchs 1.

Aus der DE-A 32 07 728 ist eine querbeschleunigungsabhängige Bremsdrucksteuervorrichtung für eine Bremsanlage eines Kraftfahrzeugs bekannt, bei der ein Steuerkolben eines Druckminderers mit seiner kleinen Wirkfläche einen mit einem Bremsdruckgeber verbundenen Eingangsraum und mit seiner größeren Wirkfläche einen mit mindestens einem Radbremszylinder verbundenem Ausgangsraum zugewandt ist. Der Eingangs- und Ausgangsraum sind durch einen Kanal verbunden, der von einer Ventilkugel abschließbar ist. Die Druckminderer sind in Fahrzeuglängsrichtung unter einem Winkel zur Fahrzeuglängsmittenachse ausgerichtet und derart wirkend, daß sich bei einer Bremsung in der Kurve eine Bremskraftverschiebung ergibt, bei der ein stark belastetes kurvenäußeres Vorderrad einen erhöhten Bremskraftanteil und das stark entlastete kurveninnere Hinterrad eine unter dem Normalbremskraftanteil liegende Bremskraft aufweist.

Die Aufgabe der Erfindung ist es eine Bremsdrucksteuervorrichtung zu schaffen, die in Abhängigkeit von Querbeschleunigungskräften auf die Bremszylinder, insbesondere von Hinterradbremsen wirkt und eine optimierte Fahrstabilität gewährleistet.

Diese Aufgabe wird erfindungsgemäß durch die kennzeichnenden Merkmale des Anspruchs 1 gelöst. Weitere vorteilhafte Ausbildungen der Erfindung beinhalten die Unteransprüche.

Die mit der Erfindung hauptsächlich erzielten Vorteile bestehen darin, daß durch die Beaufschlagung der Bremszylinder der beiden Hinterräder gemeinsam mit einem gleichen Ausgangsbremsdruck, der unter dem Ausgangsbremsdruck bei einer Bremsung während einer Geradeausfahrt liegt, die Fahrstabilität des Fahrzeugs erhöht wird.

Durch die gemeinsame Abbremsung der Hinterräder mit einem geringeren Ausgangsbremsdruck genenüber einem gleichbleibenden Bremsdruck wird mehr Seitenkraftvermögen aufgebracht und das Fahrzeug kann bei Kurvenfahrt wesentlich sicherer abgebremst werden, da das Fahrzeugheck nicht mehr ausbrechen kann und somit das Fahrverhalten stabil gehalten wird.

Nach der Erfindung sind zwei hintereinander verbundene Druckminderer vorgesehen, wobei jeweils ein Druckminderer einer aus einer Rechtskurve und einer aus einer Linkskurve resultierenden Querbeschleunigungskraft zugeordnet ist. Zur entsprechenden Ansteuerung in Abhängigkeit von der Querbeschleunigung sind die Druckminderer in Fahrzeugquerrichtung angestellt. Sie können zu einer Baueinheit zusammengefaßt oder auch vereinzelt im Fahrzeug untergebracht werden.

Ein Ausführungsbeispiel der Erfindung ist in der Zeichnung dargestellt und wird im folgenden näher beschrieben.

Es zeigen

Fig. 1 eine Vorderansicht auf die beiden zu einer Horizontalebene angestellten Druckminderer mit ihren Leitungsverbindungen von einem Bremsdruckgeber zu den Bremszylindern von Hinterrädern und

Fig. 2 eine Anordnung von zu einer Baueinheit verbundenen Druckminderern.

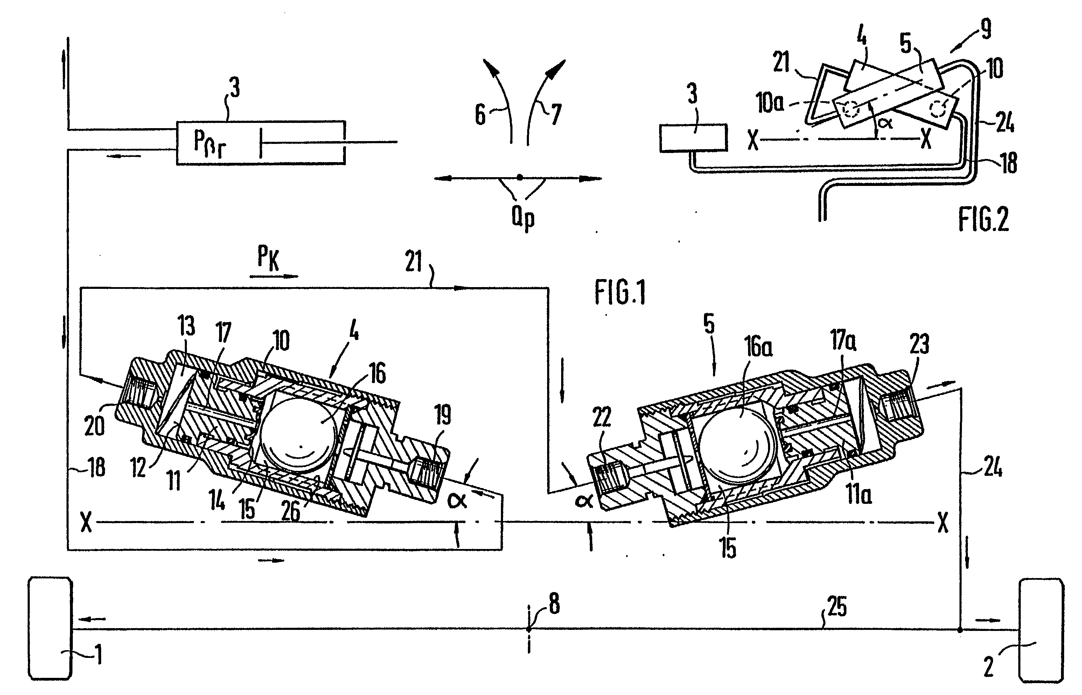

Nach Fig. 1 sind alle Räder eines Kraftfahrzeugs mit hydraulisch betätigten Bremsen vorgesehen, wobei nur die Bremszylinder 1 und 2 der beiden Hinterräder dargestellt sind. Ein allen Bremsen gemeinsamer Bremsdruckgeber 3 in Form eines durch ein Bremspedal betätigbaren Hauptbremszylinders beaufschlagt einerseits die Bremsen der Vorderräder, was nicht näher dargestellt ist, und andererseits die Bremszylinder 1 und 2 von Hinterradbremsen über je einen querbeschleunigungsabhängigen Druckminderer 4 und 5. Dabei wirkt der Druckminderer 4 beim Durchfahren einer Linkskurve (Pfeilrichtung 6) und der weitere Druckminderer 5 beim Durchfahren einer Rechtskurve (Pfeilrichtung 7) in der Weise, daß gleiche Bremsdrücke auf die beiden Bremsen der Hinterräder wirken und dieser Bremsdruck geringer ist als bei einer Bremsung bei Geradeausfahrt. Druckminderer 4 und 5 sind hierzu quer zur Fahrzeuglängsmittenachse 8 des Fahrzeugs und jeweils unter einem spitzen Winkel α zu einer Horizontalebene X-X angestellt.

Wie in Fig. 1 dargestellt ist, können die Druckminderer 4 und 5 vereinzelt im Fahrzeug angeordnet sein oder wie Fig. 2 zeigt können die Druckminderer 4 und 5 auch zu einer Baueinheit 9 zusammengefaßt werden, was eine raumsparende Anordnung ergibt.

Der Druckminderer 4 bzw. 5 umfaßt im wesentlichen in einem Gehäuse 10 einen axial verschiebbaren Stufenkolben 11 mit einer großen Wirkfläche 12 in einem Ausgangsraum 13 und einer kleinen Wirkfläche 14 in einem Eingangsraum 15, in dem eine Ventilkugel 6 geführt ist. Der Eingangsraum 15 und der Ausgangsraum 16 sind über einen Kanal 17 bzw. 17a miteinander verbunden, der über die Ventilkugel 16 bzw. 16a abschließbar ist. An den Eingangsraum 15 ist eine Druckleitung 18 vom Bremsdruckgeber 3 über die Gehäuseeingangsöffnung 19 angeschlossen, wobei eine Gehäuseausgangsöffnung 20 am Ausgangsraum 16 an eine Verbindungsleitung 21 angeschlossen ist. Diese mündet in eine Gehäuseeingangsöffnung 22 des weiteren Druckminderers 5 ein. Die Gehäuseausgangsöffnung 23 dieses Druckminderers 5 ist mit einer Steuerleitung 24 versehen, die an eine die Bremszylinder 1 und 2 der beiden Hinterräder verbindenden Druckleitung 25 angeschlossen wird.

Die Anstellung der Druckminderer 4 und 5 unter einem Winkel α ist so gewählt, daß die Ventilkugeln 10 und 10a in Abhängigkeit von der Größe der Querbeschleunigungskraft im Eingangsraum 15 auf der ansteigenden Führungsbahn 26 des Gehäuses 10 zur kleineren Wirkfläche 14 bewegt wird und der Kanal 17 bzw. 17a schließbar ist. Insbesondere soll die Ventilkugel 10 bzw. 10a dann den Kanal 17 bzw. 17a der Stufenkolben 11 bzw. 11a schließen, wenn bei einer Kurvenfahrt eine vorgegebene Mindestquerbeschleunigung (in der Regel zwischen 0,1 und 0,5 g) erreicht wird. Dieser Wert kann in Abhängigkeit vom Fahrzeugtyp auch in einer anderen Größe gewählt werden. Insbesondere hat sich der Wert von ca. 0,3 g beim Porsche Typ 959 als günstig herausgestellt.

Bei Bremsungen geradeaus steigt mit zunehmendem Druck des Bremsdruckgebers 3 auch der Bremsdruck in den Bremszylindern 1 und 2 der beiden Hinterräder im gleichem Maße an.

Bei einer Kurvenfahrt jedoch (z. B. Rechtskurve, Pfeilrichtung 7) verschiebt sich die Ventilkugel 16 des Druckminderers 4 entlang der unter einem Winkel α angestellten Führungsbahn 26 und schließt den Kanal 17 im Stufenkolben. Bei einer dann erfolgenden Bremsung während dieser Kurvenfahrt strömt die vom Bremszylinder 3 über die Leitung 18 zugeführte Bremsflüssigkeit über die Gehäuseeingangsöffnung 19 in den Aufnahmeraum 15, wirkt auf die kleinere Fläche 14 des Stufenkolbens 11 und über die größere Fläche 12 wird ein verminderter Bremsdruck über die Leitung 21 dem nachgeschalteten Druckminderer 5 zugeführt. Die Ventilkugel 16a ist in einer den Kanal 17a öffnenden Stellung, so daß die Bremsflüssigkeit über die Leitung 24 der Verbindungsleitung 25 zwischen den beiden Bremszylindern 1 und 2 zuführbar ist.

Beim Fahren einer Linkskurve (Pfeilrichtung 6) und einer gleichzeitigen Bremsung schließt die Ventilkugel 16a den Kanal 17a des Druckminderers 5, so daß über diesen ein verminderter Bremsdruck den Bremszylinders 1 und 2 (wie zuvor beschrieben für die Rechtskurve) zuführbar ist.

**Patentansprüche**

1. Querbeschleunigungsabhängige Bremsdrucksteuervorrichtung für eine hydraulische Fahrzeugbremsanlage mit zwei Druckminderern, bei der ein Stufenkolben eines Druckminderers mit seiner kleinen Wirkfläche einem mit einem Bremsdruckgeber verbundenen Eingangsraum und mit seiner größeren Wirkfläche einem mit mindestens einem Radbremszylinder verbundenen Ausgangsraum zugewandt ist, und der Eingangs- und Ausgangsraum durch einen Kanal verbunden ist und eine beschleunigungsabhängig bewegbare Ventilkugel im Eingangsraum und ein Ventilsitz im Stufenkolben vorgesehen ist, dadurch gekennzeichnet, daß bei einer Querbeschleunigungskraft (Qg) und einem anstehenden Bremsdruck der Stufenkolben (11, 11a) eines der beiden Druckminderer (4 oder 5) beaufschlagt ist und den Bremszylindern (1 und 2) beider Hinterräder über den nachgeschalteten und dem in Durchflußposition stehenden weiteren Druckminderer (4 oder 5) ein gleicher Ausgangsbremsdruck zugeführt wird, und daß dieser unterhalb des Bremsdruckes bei einer Geradeausfahrtbremsung liegt.

2. Bremsdrucksteuervorrichtung nach Anspruch 1, dadurch gekennzeichnet, daß die Ventilkugel (16 bzw. 16a) des bremsdruckbeaufschlagten Druckminderers (4 bzw. 5) den Kanal (17 bzw. 17a) durchflußsperrend im Eingangsraum (15) angeordnet ist und die zugeordnete kleine Wirkfläche (14) des Stufenkolbens (11 bzw. 11a) druckbeaufschlagt ist, dergestalt, daß der verminderte Ausgangsbremsdruck aus der großen Wirkfläche (12) im Ausgangsraum (13) des Kolbens (11 bzw. 11a) den beiden Bremszylindern (1 und 2) zuführbar ist.

3. Bremsdrucksteuervorrichtung nach den Ansprüchen 1 oder 2, dadurch gekennzeichnet, daß jeweils ein Druckminderer (4) einer Querbeschleunigungskraft (Qg) aus einer Rechtskurve und ein weiterer Druckminderer (5) einer Querbeschleunigungskraft (Qg) aus einer Linkskurve zugeordnet ist.

4. Bremsdrucksteuervorrichtung nach Anspruch 1, dadurch gekennzeichnet, daß die Ventilkugel (16, 16a) jedes Druckminderers (4, 5) bei einer Querbeschleunigung (0,1 - 0,5 g) mediumdurchflußsperrend im Gehäuse am Stufenkolben (11, 11a) gehalten ist.

5. Bremsdrucksteuervorrichtung nach einem oder mehreren der vorhergehenden Ansprüche, dadurch gekennzeichnet, daß die beiden Druckminderer (4, 5) quer zur Fahrzeuglängsmittenachse (8) des Fahrzeugs angeordnet und jeweils unter einem spitzen Winkel (α) zu einer Horizontalebene (X-X) angestellt sind, derart, daß die Ventilkugeln (16, 16a) der Druckminderer (4, 5) unter Einwirkung der Kräfte auf einer ansteigenden Führungsbahn (26) zum Stufenkolben (11, 11a) bewegbar sind.

6. Bremsdrucksteuervorrichtung nach einem oder mehreren der vorhergehenden Ansprüche, dadurch gekennzeichnet, daß die - in bezug auf die Strömungsrichtung der Bremsflüssigkeit - hinter dem Stufenkolben (11) des einen Druckminderers (4) angeordnete Ausgangsöffnung (20) über eine Verbindungsleitung (21) an eine Eingangsöffnung (22) des weiteren Druckminderers (5) angeschlossen ist, dessen Ausgangsöffnung (23) über eine Steuerleitung (24) mit einer die Bremszylinder (1 und 2) beider Räder verbindenden Druckleitung (25) verbunden wird.

7. Bremsdrucksteuervorrichtung nach einem oder mehreren der vorhergehenden Ansprüche, dadurch gekennzeichnet, daß die beiden Druckminderer (4 und 5) zu einer Baueinheit (9) zusammengefaßt sind und eine sich kreuzende Anordnung aufweisen und unter einem Winkel (α) gehalten sind.

**Claims**

1. A lateral acceleration-sensitive brake-pressure control device for a vehicle hydraulic-brake system, having two pressure reducers, in which a differential piston of a pressure reducer has its small operative surface facing an inlet chamber connected to a brake-pressure sensor and its larger operative surface facing an outlet chamber connected to at least one wheel brake cylinder, and the inlet and outlet chambers are connected by a duct, and a ball valve movable as a function of acceleration is provided in the inlet chamber and a valve seating is provided in the differential piston, characterized in that with a lateral acceleration force (Qg) and a prevailing brake pressure the differential piston (11, 11a) of one of the two pressure reducers (4 or 5) is acted upon and an equal output brake pressure is supplied to the brake cylinders (1 and 2) of the two rear wheels by way of the pressure reducer (4 or 5) arranged downstream and the additional pressure reducer (4 or 5) arranged in the throughflow position, and the said output brake pressure lies below the brake pressure when braking while travelling straight.

2. A brake-pressure control device according to Claim 1, characterized in that the ball valve (16 and 16a respectively) of the pressure reducer (4 and 5 respectively) acted upon by brake pressure is arranged in the inlet chamber (15) so as to block the throughflow through the duct (17 and 17a respectively), and the associated small operative surface (14) of the differential piston (11 and 11a respectively) is acted upon by pressure in such a way that the reduced output brake pressure from the large operative surface (12) in the outlet chamber (13) of the piston (11 and 11a respectively) can be supplied to the two brake cylinders (1 and 2).

3. A brake-pressure control device according to Claim 1 or 2, characterized in that in each case one pressure reducer (4) is associated with a lateral acceleration force (Qg) from a right-hand curve and an additional pressure reducer (5) is associated with a lateral acceleration force (Qg) from a lefthand curve.

4. A brake-pressure control device according to Claim 1, characterized in that the valve balls (16, 16a) of each pressure reducer (4, 5) is held in the casing against the differential piston (11, 11a) so as to block the medium throughflow in the case of lateral acceleration (0.1–0.5 g).

5. A brake-pressure control device according to one or more of the preceding Claims, characterized in that the two pressure reducers (4, 5) are arranged transversely to the longitudinal median axis (8) of the vehicle and are set in each case at an acute angle ($\alpha$) to a horizontal plane (X–X), in such a way that the valve balls (16, 16a) of the pressure reducers (4, 5) are movable under the action of the forces on a rising guide path (26) towards the differential piston (11, 11a).

6. A brake-pressure control device according to one or more of the preceding Claims, characterized in that the outlet opening (20) arranged behind the differential piston (11) of one pressure reducer (4) – with respect to the flow directio of the brake fluid – is joined by way of a connexion line (21) to an inlet opening (22) of the additional pressure reducer (5), the outlet opening (23) of which is connected by way of a control line (24) to a pressure line (25) connecting the brake cylinders (1 and 2) of the two wheels.

7. A brake-pressure control device according to one or more of the preceding Claims, characterized in that the two pressure reducers (4 and 5) are combined to form a structural unit (9) and are arranged in a crossed manner and are held at an angle ($\alpha$).

## Revendications

1. Dispositif de commande de la pression de freinage en fonction de l'accélération transversale, destiné à un système de freinage hydraulique pour véhicules automobiles, comportant deux réducteurs de pression, dans lequel un piston à gradins d'un réducteur de pression est tourné, par sa petite surface d'action, vers un compartiment d'entrée relié à un capteur de pression de freinage, et par sa grande surface d'action vers un compartiment de sortie relié à au moins un cylindre de frein de roue, et le compartiment d'entrée et le compartiment de sortie sont reliés par un conduit, et une bille de soupape se déplaçant en fonction de l'accélération, est prévue dans le compartiment d'entrée, et un siège de soupape dans le piston à gradins, caractérisé en ce que dans le cas où s'exerce une force d'accélération transversale (Qg) et où s'établit une pression de freinage, le piston à gradins (11, 11a) de l'un des deux réducteurs de pression (4 ou 5), est sollicité et une même pression de freinage de sortie est envoyée aux cylindre de frein (1 et 2) des deux roues arrière, par l'autre réducteur de pression (4 ou 5) monté en aval et se trouvant en position ouverte, et en ce que cette pression de freinage de sortie est inférieure à la pression qui s'établit dans le cas d'un freinage en ligne droite.

2. Dispositif de commande de la pression de freinage selon la revendication 1, caractérisé en ce que la bille de soupape (16 ou 16a) du réducteur de pression (4 ou 5) soumis à la pression de freinage, est placée dans le compartiment d'entrée (15), de manière à obturer le passage dans le conduit (17 ou 17a), et en ce que la petite surface d'action (14) associée du piston à gradins (11 ou 11a), est soumise à l'action de la pression, de manière que la pression de freinage de sortie réduite, provenant de la grande surface d'action (12), dans le compartiment de sortie (13) du piston (11 ou 11a), puisse être envoyée aux deux cylindres de frein (1 et 2).

3. Dispositif de commande de la pression de freinage selon les revendications 1 ou 2, caractérisé en ce qu'un réducteur de pression (4) est associé à une force d'accélération transversale (Qg) due à un virage à droite, et un autre réducteur de pression (5) est associé à une force d'accélération transversale (Qg) due à un virage à gauche.

4. Dispositif de commande de la pression de freinage selon la revendication 1, caractérisé en ce que la bille de soupape (16, 16a) de chaque réducteur de pression (4, 5) est maintenue sur le piston à gradins (11, 11a), de manière à fermer le passage du fluide dans le boîtier, dans le cas d'une accélération transversale (0,1–0,5 g).

5. Dispositif de commande de la pression de freinage selon une ou plusieurs des revendications ci-dessus, caractérisé en ce que les deux réducteurs de pression (4, 5) sont placés transversalement à l'axe médian longitudinal (8) du véhicule automobile, et de manière à former dans chaque cas un angle aigu ($\alpha$) par rapport à un plan horizontal (X–X), de telle sorte que les billes de soupape (16, 16a) des réducteurs de pression (4, 5) se déplacent sur une trajectoire de guidage (26) montante par rapport au piston à gradins (11, 11a), sous l'effet des forces.

6. Dispositif de commande de la pression de freinage selon une ou plusieurs des revendications ci-dessus, caractérisé en ce que l'ouverture de sortie (20) placée derrière le piston à gradins (11) – par rapport au sens d'écoulement du liquide de freinage – est raccordée, par un conduit de liaison (21), à une ouverture d'entrée (22) de l'autre réducteur de pression (5) dont l'ouverture de sortie (23) est reliée, par un conduit de commande (24), à un conduit sous pression (25) reliant les cylindres de frein (1 et 2) aux deux roues.

7. Dispositif de commande de la pression de freinage selon une ou plusieurs des revendications ci-dessus, caractérisé en ce que les deux réducteurs de pression (4 et 5) sont réunis pour former une unité de construction (9), en ce qu'ils présentent une disposition en croix, et sont maintenus sous un angle ($\alpha$).

FIG.2

FIG.1